# EUROPEAN PATENT SPECIFICATION

(11) **EP 4 465 386 B1**
(45) Date of publication and mention of the grant of the patent: **25.11.2026**
(21) Application number: 23860850.9
(22) Date of filing: 29.08.2023
(51) Int. Cl.: H01M 4/131, H01M 4/1391, H01M 4/36, H01M 4/38, H01M 4/485, H01M 4/505, H01M 4/525, H01M 4/62, H01M 10/052, H01M 10/0562

(54) **ELECTRODE FOR ALL-SOLID-STATE BATTERY**
ELEKTRODE FÜR FESTKÖRPERBATTERIE
ÉLECTRODE POUR BATTERIE TOUT SOLIDE

(30) Priority: 01.09.2022 KR 20220110540
(43) Date of publication of application: 20.11.2024
(73) Proprietor: LG Energy Solution, Ltd., Seoul 07335 (KR)
(72) Inventor: KIM, Jeonggil, Daejeon 34122 (KR); KWON, Hyejin, Daejeon 34122 (KR); KIM, Sohee, Daejeon 34122 (KR); KIM, Ki Tae, Daejeon 34122 (KR); KIM, Taegon, Daejeon 34122 (KR); KIM, Myeongsoo, Daejeon 34122 (KR)
(74) Representative: Goddar, Heinz J.
(86) International application number: PCT/KR2023/012815
(87) International publication number: WO 2024/049174

(56) References cited:
- CN-A- 113 809 326
- JP-A- 2015 041 543
- JP-B2- 6 755 736
- KR-A- 20130 107 352
- KR-A- 20190 059 119
- KR-A- 20200 129 380
- KR-A- 20200 129 380
- US-A1- 2011 281 166
- US-A1- 2013 295 451

## Description

### [Technical Field]

The present invention relates to an electrode for an all-solid-state battery. Particularly, it relates to a positive electrode for an all-solid-state battery comprising granules coated with a sulfide-based solid electrolyte.

### [Background Art]

Various batteries are being researched to overcome the limitations of conventional lithium secondary batteries in terms of capacity, safety, power output, enlargement and microminiaturization.

For example, metal-air batteries, which have a very large theoretical capacity compared to lithium secondary batteries, all-solid-state batteries, which do not have the risk of explosion in terms of safety, supercapacitors in terms of power output, NaS batteries or redox flow batteries (RFBs) in terms of enlargement, and thin film batteries in terms of microminiaturization are being continuously researched in academia and industry.

Among them, all-solid-state batteries are batteries that replace the liquid electrolyte conventionally used in lithium secondary batteries with the solid electrolyte, and since no flammable solvents are used in the batteries, there is no ignition or explosion conventionally caused by the decomposition reaction of the electrolyte, which can greatly improve safety. In addition, since a Li metal or Li alloy can be used as the negative electrode material, it has the advantage of dramatically improving the energy density per mass and volume of the battery.

Among the solid electrolytes for an all-solid-state battery, inorganic solid electrolytes can be categorized into sulfide-based electrolytes and oxide-based electrolytes. Currently, the most technologically advanced solid electrolyte is a sulfide-based solid electrolyte, and the materials in which the ionic conductivity of this solid electrolyte is close to that of organic electrolytes have been developed.

Sulfide-based solid electrolytes have the highest ionic conductivity of 10⁻³ to 10⁻² S/cm among solid electrolytes, and their ductility allows them to contact interfaces well, which is advantageous for improving resistance, but they are sensitive to moisture, generating a H₂S gas when in contact with moisture, so a very dry environment needs to be established during the manufacture. In addition, the aggregation of active materials and solid electrolytes needs to be improved, and high-density electrodes are required due to reduced porosity.

Therefore, inventor(s) of the present invention has continuously researched an electrode for an all-solid-state battery to solve the challenges faced in the relevant art and has completed the present invention.

### [Prior art references].

### [patent reference].

(Patent reference 1) Korean Patent Laid-open Publication No. 10-2016-0146737
US 2013/295 451 A1 provides a solid-state battery electrode formed of a lithium ion conductor, an active material, and a solid electrolyte and including a granule that contains a plurality of lithium ion conductors and a plurality of active materials, as well as a method of producing a solid-state battery electrode that has a step of preparing a granule that contains a plurality of lithium ion conductors and a plurality of active materials and a step of uniformly mixing the granule with a solid electrolyte.

CN 113 809 326 A relates to a manufacturing method of an all-solid-state lithium ion battery, and belongs to the technical field of new energy power energy storage batteries. The all-solid-state battery pole piece group of the all-solid-state lithium ion battery is composed of a positive current collector, a positive active material layer, a diaphragm, a negative active material layer and a negative current collector, and the positive active material layer is composed of positive active material particles, a solid electrolyte, conductive particles and a polymer adhesive. The large-particle positive active material particles wrap the small-particle solid electrolyte and the conductive particles, and are in contact with the small-particle solid electrolyte and the conductive particles through a high-molecular adhesive.

### [Disclosure]

### [Technical Problem]

The present invention aims to provide an electrode for an all-solid-state battery, comprising granules coated with a sulfide-based solid electrolyte, which can improve the performance of the battery when applied as the electrode for the all-solid-state battery.

### [Technical Solution]

According to a first aspect of the present invention, the present invention provides an electrode for an all-solid-state battery, comprising granules coated with a sulfide-based solid electrolyte, wherein the granules include an active material, a conductive material and a binder, and the conductive material is carbon black having an average particle diameter of 120 nm to 200 nm measured as described in the specification, wherein the granules are spherical particles having a diameter of 30 µm to 150 µm measured as described in the specification, wherein the electrode for an all-solid-state battery is a positive electrode, and the active material is a lithium transition metal oxide, and wherein the granules comprise 85% to 99.8% by weight of the active material, 0.1% to 10% by weight of the binder, and 0.1% to 10% by weight of the conductive material.

In one embodiment of the present invention, the carbon black has a BET specific surface area of 15 m²/g to 35 m/g.²

In one embodiment of the present invention, the carbon black has a DBP absorption rate of 70 ml/100 g to 100 ml/100 g.

In one embodiment of the present invention, the carbon black agglomerates to form secondary particles, and the secondary particles have a particle size of 600 nm to 1,100 nm.

In one embodiment of the present invention, the granules have a porosity of 20% to 40%.

In one embodiment of the present invention, the active material is selected from the group consisting of LiCoO₂, LiNiO₂, LiMnO₂, Li₂MnO₃, LiMn₂O₄, Li(NiₐCo_{b}Mn_{c})O₂ (wherein 0<a<1, 0<b<1, 0<c<1, and a+b+c=1), LiNi_{1-y}Co_{y}O₂ (wherein 0<y<1), LiCo_{1-y}Mn_{y}O₂ (wherein 0<y<1), LiNi_{1-y}Mn_{y}O₂ (wherein 0<y<1), Li(NiₐCo_{b}Mn_{c})O₄ (wherein 0<a<2, 0<b<2, 0<c<2, and a+b+c=2), LiMn_{2-z}Ni_{z}O₄ (wherein 0<z<2), LiMn_{2-z}Co_{z}O₄ (wherein 0<z<2), and combinations thereof.

In one embodiment of the present invention, the binder is an organic binder, and the organic binder is selected from the group consisting of polyvinylidene fluoride (PVDF), vinylidene fluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylene-propylene-diene monomer (EPDM), sulfonated EPDM, styrene-butylene rubber, and fluorinated rubber.

In one embodiment of the present invention, in the electrode for an all-solid-state battery, the electrode active material layer comprising granules coated with a sulfide-based solid electrolyte has a thickness of 100 µm to 300 µm.

In one embodiment of the present invention, in the electrode for an all-solid-state battery, the electrode active material layer comprising granules coated with a sulfide-based solid electrolyte comprises 10% to 30% by weight of a sulfide-based solid electrolyte, based on the content of the granules.

In one embodiment of the present invention, when an inner diameter of the granule is divided into equal intervals, and separated from the center of the granule to the outer of the granule into the first region, second region and third region, the content of the conductive material in the granule is increased in the order of the first region, second region, and third region.

In one embodiment of the invention, the granules have an R value of 5 or less, and the R value is defined by the following formula **1.**

According to a second aspect of the present invention, the present invention provides an all-solid-state battery comprising the electrode for an all-solid-state battery as a positive electrode or a negative electrode.

### [Effects of the Invention]

In an electrode for an all-solid-state battery comprising granules coated with a sulfide-based solid electrolyte, the granules include an active material, a conductive material, and a binder, and specify the physical properties of the primary or secondary particles of carbon black as a conductive material included in the granules, thereby improving the electrical conductivity of the granules and improving the performance of the battery using the granules.

### [Description of Drawings]

FIG. 1a is an SEM image (×1,000 magnification) of a granule of Preparation Example 1 according to Experimental Example 1.
FIG. 1b is an SEM image (×5,000 magnification) of a granule of Preparation Example 1 according to Experimental Experiment 1.
FIG. 2a is an SEM image (×1,000 magnification) of a granule of Comparative Preparation Example 1 according to Experimental Example 1.
FIG. 2b is an SEM image (×5,000 magnification) of a granule of Comparative Preparation Example 1 according to Experimental Example 1.
FIG. 3 is a schematic illustration of the locations of the first region (A), second region (B), and third region (C) in the granule.

### [Best Mode]

The embodiments provided by the present invention can be achieved by the following description.

For the properties described herein, if the measurement conditions and methods are not specifically stated, the properties are measured according to the measurement conditions and methods commonly used by those skilled in the art.

In one aspect of the present invention, there is provided an electrode for an all-solid-state battery comprising granules coated with a sulfide-based solid electrolyte. The granules are spherical particles comprising an active material, a conductive material and a binder. Here, a spherical particle does not necessarily mean a perfectly spherical particle, but generally includes the concept of round particle. The powdered particulate active material, together with the conductive material, which is either a primary particle or a secondary particle, is combined by the binder solution to grow into particles having a certain range of specifications. The conductive material can be applied as a primary particle, a secondary particle, or a mixture of primary and secondary particles.

According to the present invention, the granules are spherical particles having a diameter of 30 µm to 150 µm. Here, since a spherical particle does not mean a perfectly spherical particle, the diameter means the largest value of the distances from any point on the surface of the particle to a point on another surface. Specifically, the diameter of the granules may be 30 µm or more, 35 µm or more, 40 µm or more, 45 µm or more, 50 µm or more, 150 µm or less, 145 µm or less, 140 µm or less, 135 µm or less, 130 µm or less, 125 µm or less, or 120 µm or less, and may be 30 µm to 150 µm, 40 µm to 140 µm, or 50 µm to 120 µm. If the diameter of the granules is less than the above range, the amount of sulfide-based solid electrolyte penetrating and coating the granules may be reduced due to fewer pores in the granular layer, and the performance improvement of the battery may not be pronounced, and if the diameter of the granules is greater than the above range, the distance between the surface in contact with the sulfide-based solid electrolyte and the center of the granule may be increased, and the performance improvement of the battery may not be pronounced.

An electrode for an all-solid-state battery according to the present invention is a positive electrode.

When the electrode is a positive electrode, the electrode active material included in the granules is a lithium transition metal oxide comprising one or more transition metals. In one embodiment of the present invention, the positive electrode active material may be selected from the group consisting of LiCoO₂, LiNiO₂, LiMnO₂, Li₂MnO₃, LiMn₂O₄, Li(NiₐCo_{b}Mn_{c})O₂ (wherein 0<a<1, 0<b<1, 0<c<1, and a+b+c=1), LiNi_{1-y}Co_{y}O₂ (wherein 0<y<1), LiCo_{1-y}Mn_{y}O₂, LiNi_{1-y}Mn_{y}O₂ (wherein 0<y<1), Li(NiₐCo_{b}Mn_{c})O₄ (wherein 0<a<2, 0<b<2, 0<c<2, and a+b+c=2), LiMn_{2-z}Ni_{z}O₄ (wherein 0<z<2), LiMn_{2-z}Co_{z}O₄ (wherein 0<z<2), and combinations thereof.

The conductive material included in the granules according to the present invention is carbon black having an average particle diameter of 120 nm to 200 nm. The average particle diameter is an arithmetic mean value of the particle size. Specifically, the average particle diameter of the carbon black may be 120 nm or more, 125 nm or more, 130 nm or more, 135 nm or more, 200 nm or less, 190 nm or less, 180 nm or less, 170 nm or less, and 120 nm to 200 nm, 130 nm to 190 nm, or 135 nm to 170 nm. When the diameter of the carbon black is less than the above range, the outer area of the carbon black is so small that it is difficult for the conductive material to form a structure which is effective to function between a plurality of active material particles. If the diameter of the carbon black exceeds the above range, it is difficult for the conductive material to be dispersed and positioned on an appropriate location. Furthermore, the conductive material having a particle size within the above range helps to form secondary particles with desirable properties.

According to one embodiment of the present invention, the carbon black has a BET specific surface area of 15 m²/g to 35 m²/g. The BET specific surface area is the specific surface area measured by the BET method. Specifically, the BET specific surface area of the carbon black is greater than or equal to 15 m²/g, greater than or equal to 16 m²/g, greater than or equal to 17 m²/g, greater than or equal to 18 m²/g, greater than or equal to 19 m²/g, greater than or equal to 20 m²/g, 35m²/g or less, 34m²/g or less, 33m²/g or less, 32m²/g or less, 31m²/g or less, 30m²/g or less, or may be 15m²/g to 35m²/g, 17m²/g to 33m²/g, or 20m²/g to 30m²/g. If the BET specific surface area of the carbon black is less than the above range, the area in contact with the active material relative to the weight of the carbon black may be reduced, and it may be difficult to secure functionality, and if the BET specific surface area of the carbon black is greater than the above range, it may be difficult to secure functionality because the excessive specific surface area does not allow easy contact with the active material or solid electrolyte. In addition, a conductive material having a BET specific surface area within the above range helps to form secondary particles with desirable properties.

According to one embodiment of the present invention, the carbon black as the conductive material agglomerates to form secondary particles, wherein the secondary particles have a particle size of 600 nm to 1,100 nm. In this specification, the carbon black prior to agglomeration into secondary particles may be represented as primary particles. The secondary particles may agglomerate in various shapes, wherein the particle size indicates the largest value of the distance from any point on the surface of the particle to a point on another surface. When carbon black is agglomerated to be used in the form of secondary particles, a highly functional structure can be formed because the electrolyte or active material is accessible through the pores between the carbon blacks while maintaining the conductive network between the carbon blacks constituting the secondary particles. In specific, the particle size of the secondary particles may be 600 nm or more, 650 nm or more, 700 nm or more, 1,100 nm or less, 1,000 nm or less, 900 nm or less, 600 nm to 1,100 nm, 650 nm to 1,000 nm, or 700 nm to 900 nm. If the particle size of the secondary particles is less than the above range, the functionality which can be achieved by forming the secondary particles may be minimal, and if the particle size of the secondary particles is greater than the above range, the conductive material may be concentrated too much, making it difficult to efficiently disperse the conductive material throughout the entire granule.

According to one embodiment of the present invention, the carbon black as the conductive material has a DBP absorption rate of 70 ml/100 g to 100 ml/100 g. The DBP absorption rate indicates the change in torque that occurs upon impregnation with a plasticizer, Dibutyl Phthalate (DBP), and the DBP absorption rate of the conductive material can affect the formation of secondary particles by the conductive material. In specific, the DBP absorption rate of the carbon black may be 70 ml/100 g or more, 71 ml/100 g or more, 72 ml/100 g or more, 73 ml/100 g or more, 74 ml/100 g or more, 75 ml/100 g or more, 100 ml/100 g or less, 98 ml/100 g or less, 96 ml/100 g or less, 94 ml/100 g or less, 92 ml/100 g or less, 90 ml/100 g or less, 70 ml/100 g to 100 ml/100 g, 73 ml/100 g to 94 ml/100 g, or 75 ml/100 g to 90 ml/100 g. Carbon black having a DBP absorption rate within the above range helps to form secondary particles with desirable properties.

The binder included in the granules according to one embodiment of the present invention is mixed with the powdered particulate active material and the conductive material, which is a primary particle or secondary particle, to bind these components and aid in the growth of the particles. Since a sulfide-based solid electrolyte has moisture-sensitive properties, such as the generation of H₂S gas upon contact with moisture, it is desirable to exclude as much moisture as possible from the formation of the granules. According to one embodiment of the present invention, the binder is an organic binder. The organic binder indicates a binder that is soluble or dispersible in an organic solvent, in particular, N-methylpyrrolidone (NMP), as distinguished from an aqueous binder, which is soluble or dispersible in water. Specifically, the organic binder can be selected from the group consisting of, but is not limited to, polyvinylidene fluoride (PVDF), vinylidene fluoride-hexafluoropropylene copolymer (PVDF-co-HFP), polyvinyl alcohol, starch, hydroxypropyl cellulose, regenerated cellulose, and polyvinylpyrrolidone, polyimide, polyamideimide, polyethylene, polypropylene, ethylene-propylene-diene monomer (EPDM), sulfonated EPDM, styrene-butylene rubber and fluorinated rubber.

According to the present invention, in the granules, the active material is comprised in an amount of 85% to 99.8% by weight, particularly 88% to 99.5% by weight, more particularly 90% to 99.3% by weight, the binder is comprised in an amount of 0.1% to 10% by weight, particularly 0.2% to 8% by weight, more particularly 0.3% to 7% by weight, and the conductive material is comprised in an amount of 0.1% to 10% by weight, particularly 0.15% to 8% by weight, more particularly 0.2% to 5% by weight. When the contents of the active material, the binder and the conductive material are adjusted within the above ranges, it may be advantageous for improving performance of the battery.

According to one embodiment of the present invention, the granules have a porosity of 20% to 40%. The porosity of the granules indicates the ratio of the pore volume in the granules. Specifically, the porosity of the granules may be 20% or more, 21% or more, 22% or more, 23% or more, 24% or more, 25% or more, 40% or less, 39% or less, 38% or less, 37% or less, 36% or less, or 35% or less. If the porosity of the granules is below the above range, the performance improvement of the battery may not be pronounced because it is difficult for the sulfide-based solid electrolyte to intimately contact the granules, and if the porosity of the granules is above the above range, the performance improvement of the battery may not be pronounced because the amount of active material is reduced relative to the volume of the granules, making it difficult to provide an electrode highly loaded with the active material.

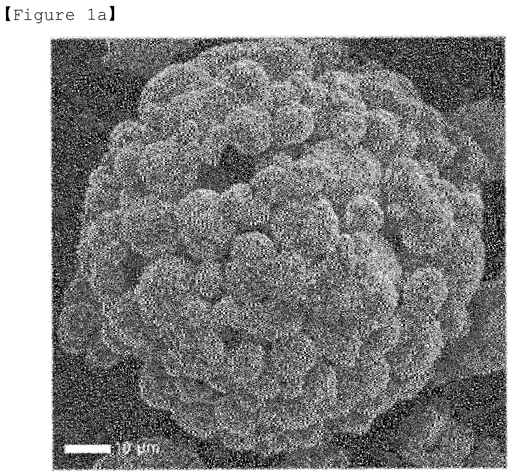

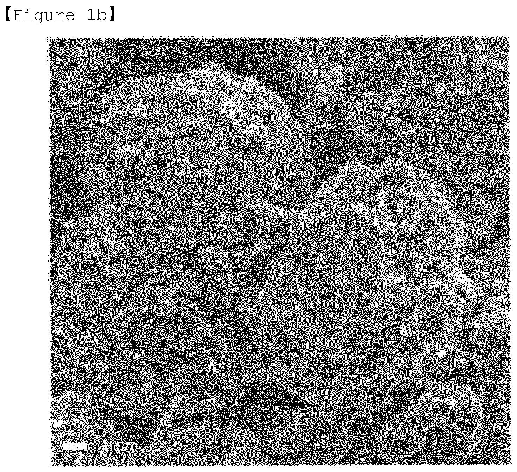

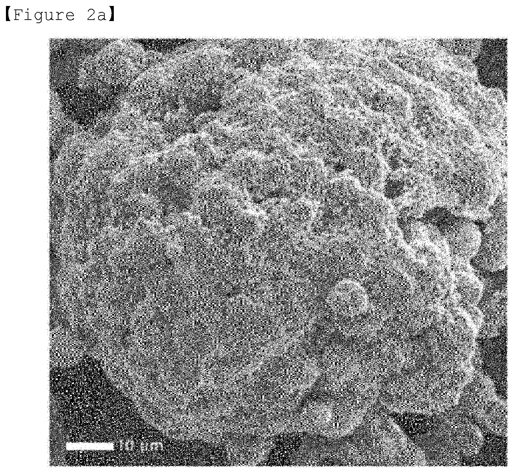

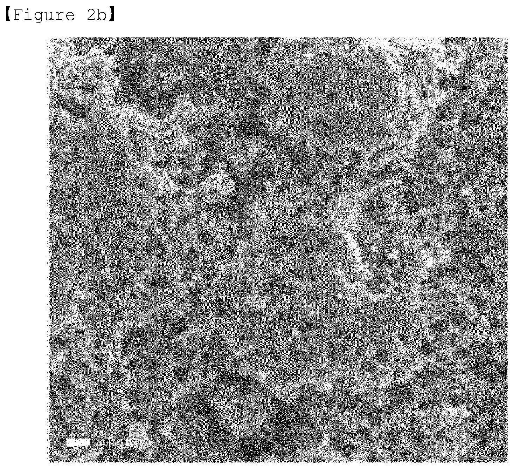

Typically, in the preparation of granules, a binder solution is introduced along with a powdered particulate active material and a conductive material to grow the particle size of the granules to a certain level, wherein the interior of the device may be rotated to sphericalize the granules and separate them from each other. This rotation may cause centrifugal forces to the granules, and the components of the granules may be concentrated on the outside of the granules than in the center of the granules. Nevertheless, when preparing the granules according to one embodiment of the present invention, the migration of the conductive material towards the surface of the granules during the high-temperature solvent drying process may be minimized, resulting in a uniform distribution of the conductive material within the granules. This can be seen in the SEM images of FIGS. 1 and 2 according to Experimental Example 1 below, and as shown in FIG. 2, if a large amount of conductive material migrates toward the surface of the granules, not only the porosity of the granules decreases, but the active material in the granules is not easily exposed to the electrolyte, which can lead to a decrease in the performance of the battery.

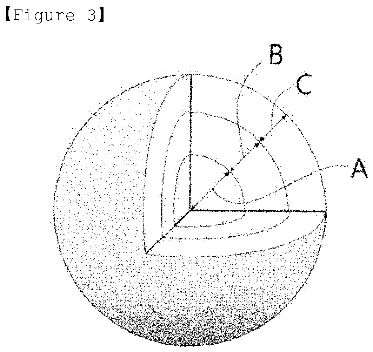

FIG. 3 is a schematic illustration of the shape of a granule according to one embodiment of the present invention, and as shown in FIG. 3, the interior of the granule may be divided into a first region (A region), a second region (B region), and a third region (C region). The first region, the second region, and the third region are separated by dividing the internal diameter of the granule by equal intervals, wherein the first region is located at the most central part of the granule, the third region is located at the most external part of the granule, and the second region is located between the first region and the third region. According to one embodiment of the present invention, the content of the conductive material in the granule is increased in the order of the first region, second region, and third region.

According to one embodiment of the present invention, the granules have an R value of 5 or less, 4.5 or less, or 4 or less. The R-value quantifies the change in the conductive material content between adjacent regions and is defined by formula 1 below: [Formula 1] $R = {\left(\frac{{r}_{B}}{{r}_{A}}\right)}^{2} + {\left(\frac{{r}_{C}}{{r}_{B}}\right)}^{2}$ wherein r_{A} is the content (%) of the conductive material in the first region, r_{B} is the content (%) of the conductive material in the second region, and r_{C} is the content (%) of the conductive material in the third region. Since the content of the conductive material in each region is based on the total content of the conductive material in the granules, the sum of r_{A}, r_{B} and r_{C} is 100%. Basically, since the content of the conductive material according to one embodiment of the present invention increases in the order of the first region, the second region, and the third region, the value of R is greater than or equal to 1. If the variation in the contents of the conductive materials in the regions is large, the R value may be high, and if the variation in the contents of the conductive materials in the regions is small, the R value may be low. Although a low R value can help to improve the electrical conductivity of the entire granule due to the uniform distribution of the conductive material, the electrical conductivity of the granule is not only affected by the R value, but also affected by the size, shape, content, etc. of the conductive material.

In the electrode for an all-solid-state battery, the solid electrolyte is coated on at least some or all of the surface of the granules. The solid electrolyte may be a polymeric solid electrolyte formed by the addition of a polymeric resin to a solvated lithium salt, or a polymeric gel electrolyte in which an organic electrolyte containing an organic solvent and a lithium salt, an ionic liquid, a monomer or an oligomer is embedded in a polymeric resin. The solid electrolyte may use one or more selected from polymer-based solid electrolyte, sulfide-based solid electrolyte and oxide-based solid electrolyte, and, according to one embodiment of the present invention, the solid electrolyte is a sulfide-based solid electrolyte. In the electrode for an all-solid-state battery, the sulfide-based solid electrolyte is applied by impregnating the sulfide-based electrolyte with a granular layer consisting of the granules and then drying it.

According to one embodiment of the present invention, the lithium salt is an ionizable lithium salt, which can be represented by Li⁺X⁻. The anion of the lithium salt is not particularly limited, but may include, for example, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻. In one embodiment of the present invention, the sulfide-based solid electrolyte contains sulfur (S) and has the ionic conductivity of a metal in Group 1 or 2 of the periodic table, and may include a Li-P-S-based glass or a Li-P-S-based glass ceramic. Non-limiting examples of the sulfide-based solid electrolyte may be, or include one or more of, Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ and Li₂S-GeS₂-ZnS.

The electrode for an all-solid-state battery according to one embodiment of the present invention can be prepared by loading granules onto a current collector to produce a sheet-like granular layer, and then impregnating the granular layer with a sulfide-based electrolyte and drying it. The current collector is an electrically conductive material such as a metal plate, and depending on the polarity of the battery, electrodes known in the art can be used appropriately.

According to one embodiment of the present invention, in the electrode for an all-solid-state battery, the electrode active material layer comprising granules coated with a sulfide-based solid electrolyte has a thickness of 100 µm to 300 µm. If a current collector is used in the manufacture of the electrode, the electrode active material layer indicates a sheet-like layer applied over the current collector, excluding the current collector. Specifically, the thickness of the electrode active material layer may be 100 µm or more, 110 µm or more, 120 µm or more, 130 µm or more, 140 µm or more, 150 µm or more, 300 µm or less, 290 µm or less, 280 µm or less, 270 µm or less, 260 µm or less, or 250 µm or less. If the thickness of the electrode active material layer is less than the above range, the loading amount of the active material may be reduced and the performance improvement of the battery may not be pronounced, and if the thickness of the electrode active material layer exceeds the above range, the durability of the electrode may be reduced and the performance improvement of the battery may not be pronounced.

According to one embodiment of the present invention, the electrode active material layer comprising granules coated with a sulfide-based solid electrolyte in the electrode for an all-solid-state battery comprises 10% to 30% by weight of a sulfide-based solid electrolyte, based on the content of the granules. In specific, the content of the sulfide-based solid electrolyte may be 10% by weight or more, 11% by weight or more, 12% by weight or more, 13% by weight or more, 14% by weight or more, 15% by weight or more, 30% by weight or less, 29% by weight or less, 28% by weight or less, 27% by weight or less, 26% by weight or less, or 25 wt% or less. If the content of the sulfide-based solid electrolyte is below the above range, the performance improvement of the battery may not be pronounced due to the difficulty of electron transfer between the electrolyte and the active material as an all-solid-state battery, and if the content of the sulfide-based solid electrolyte exceeds the above range, the performance improvement of the battery may not be pronounced due to the relatively reduced loading amount of the active material.

In one aspect of the present invention, there is provided an all-solid-state battery comprising the electrodes for an all-solid-state battery as a positive electrode. In preparing the all-solid-state battery, a separate solid electrolyte layer may be introduced between the positive electrode and the negative electrode in addition to the solid electrolyte contained in the electrode, and the solid electrolyte layer may serve as a separating film in a conventional lithium secondary battery. The electrode may in some cases be utilized for semi-solid-state batteries with a liquid electrolyte, which may further require a separate polymeric separating film.

The polymeric separating film is interposed between the negative electrode and the positive electrode, and serves to electrically isolate the negative electrode and the positive electrode while allowing lithium ions to pass through. The polymeric separating film may be any polymeric separating film conventionally used in the field of all-solid-state batteries, but is not particularly limited thereto.

In one aspect of the present invention, there is provided a battery module including the all-solid-state battery as a unit cell, a battery pack including the battery module, and a device including the battery pack as a power source.

Specific examples of the devices include, but are not limited to, a power tool powered by an electric motor; an electric vehicle, including an electric vehicle (EV), a hybrid electric vehicle (HEV) and a plug-in hybrid electric vehicle (PHEV); an electric two-wheeled vehicle, including an electric bicycle (E-bike) and an electric scooter; an electric golf cart; and a power storage system.

Hereinafter, Examples are presented to facilitate an understanding of the present invention. The following Examples are provided to illustrate the present invention, but the present invention is not limited thereto.

### Preparation Example: Preparation of granules containing an active material

### Preparation Example 1

LiNi_{0.6}Co_{0.2}Mn_{0.2}O₂ (NCM 622) as the active material, secondary particles (having a particle size of about 800 nm) in which carbon black (having an average particle diameter (D₅₀) of about 150 nm, a BET specific surface area of about 25 m²/g, and a DBP absorption of about 81 ml/100 g) agglomerated as the conductive material, and polyvinylidene fluoride (PVDF) as the binder were mixed at a weight ratio of 94:3:3 (active material : conductive material : binder) in an N-methylpyrrolidone solvent to prepare a slurry, and then granules with a diameter of about 60 µm (having a porosity of 31%) were prepared by spray-drying method.

### Comparative Preparation Example 1

LiNi_{0.6}Co_{0.2}Mn_{0.2}O₂ (NCM 622) as the active material, secondary particles (having a particle size of about 150 nm) in which carbon black (having an average particle diameter (D₅₀) of about 30 nm, a BET specific surface area of about 120 m²/g, and a DBP absorption of about 190 ml/100 g) agglomerated as the conductive material, and polyvinylidene fluoride (PVDF) as the binder were mixed at a weight ratio of 94:3:3 (active material : conductive material : binder) in an N-methylpyrrolidone solvent to prepare a slurry, and then granules with a diameter of about 60 µm (having a porosity of 15%) were prepared by spray-drying method.

### Comparative Preparation Example 2

LiNi_{0.6}Co_{0.2}Mn_{0.2}O₂ (NCM 622) as the active material, secondary particles (having a particle size of about 750 nm) in which carbon black (having an average particle diameter (D₅₀) of about 40 nm, a BET specific surface area of about 90 m²/g, and a DBP absorption of about 230 ml/100 g) agglomerated as the conductive material, and polyvinylidene fluoride (PVDF) as the binder were mixed at a weight ratio of 94:3:3 (active material : conductive material : binder) in an N-methylpyrrolidone solvent to prepare a slurry, and then granules with a diameter of about 60 µm (having a porosity of 19%) were prepared by spray-drying method.

### Comparative Preparation Example 3

LiNi_{0.6}Co_{0.2}Mn_{0.2}O₂ (NCM 622) as the active material, secondary particles (having a particle size of about 3,000 nm) in which carbon black (having an average particle diameter (D₅₀) of about 280 nm, a BET specific surface area of about 9 m²/g, and a DBP absorption of about 40 ml/100 g) agglomerated as the conductive material, and polyvinylidene fluoride (PVDF) as the binder were mixed at a weight ratio of 94:3:3 (active material : conductive material : binder) in an N-methylpyrrolidone solvent to prepare a slurry, and then granules with a diameter of about 60 µm (having a porosity of 37%) were prepared by spray-drying method.

The properties of the granules prepared in Preparation Example 1 and Comparative Preparation Examples 1 to 3 are summarized in Table 1 below.

**[Table 1]**

| Properties | Preparation Example 1 | Comparative Preparation Example 1 | Comparative Preparation Example 2 | Comparative Preparation Example 3 |
|---|---|---|---|---|
| Average diameter of the primary particles of the conductive material (nm)¹⁾ | 150 | 30 | 40 | 280 |
| BET specific surface area of the primary particles of the conductive material (m²/g)²⁾ | 25 | 120 | 90 | 9 |
| DBP absorption rate in the primary particles of the conductive material (ml/100g)³⁾ | 81 | 190 | 230 | 40 |
| Particle size of the secondary particles of the conductive material (nm)⁴⁾ | 800 | 150 | 750 | 3,000 |
| Porosity of the granules (%)⁵⁾ | 31 | 15 | 19 | 37 |
| Conductive material content in the first region in the granules (r_{A}, %)⁶⁾ | 27 | 12 | 15 | 29 |
| Conductive material content in the second region in the granules (r_{B}, %)⁶⁾ | 32 | 14 | 24 | 31 |
| Conductive material content in the third region in the | 41 | 74 | 61 | 40 |
| granules (r_{C}, %)⁶⁾ | | | | |
| R value of conductive material in the granules⁷⁾ | 3.047 | 29.300 | 9.020 | 2.808 |
| Electrical conductivity of the granules (%)⁸⁾ | - | 66 | 71 | 54 |

| | | | | |
|---|---|---|---|---|
| 1) Average particle diameter (nm) of the primary particles of the conductive material: The particle size of each particle distinguishable in the Scanning Electron Microscope (SEM) image was measured, and the arithmetic mean of the measurements was calculated. 2) BET specific surface area of the primary particles of the conductive material (m²/g): It was calculated from mass gas adsorption under liquid nitrogen temperature (77 K) using BELSORP-mino II manufactured by BEL Japan. 3) DBP absorption rate of the primary particles of the conductive material (ml/100g): DBP (Dibutyl Phthalate), a plasticizer, was mixed with the conductive material using an oil absorption measurement device (S-500, Asahi) to measure the change in torque generated by plasticizer impregnation, and the oil absorption amount at which the viscosity represented by the torque value is maximized was calculated as the DBP adsorption value. 4) Particle size (nm) of the secondary particles of the conductive material: It was measured by wet method using a particle size analyzer (Mastersizer, Malvern). 5) Porosity of the granules (%): It was measured using a mercury porosity analyzer (Autopore, Micromeritics). 6) Conductive material content (%) in the first, second or third region of the granules: The percentage of the content of the conductive material in a particular region relative to the entire conductive material in the granule cross section was calculated by using SEM, Energy Dispersive Spectroscopy (EDS) measurements and image analysis programs. 7) R value of the conductive material in the granules: Based on the results in 6) above, it was calculated using Formula 1 above. 8) Electrical conductivity of the granules (%): It was measured using a 4-Probe powder electrical conductivity measuring electrode (Powder Resistivity System (MCP-PD51), Mitsubishi Chemical) and calculated as a % ratio based on Preparation Example 1. | | | | |

### Examples: Preparation of an electrode and a battery comprising the prepared granules

### Example 1

The granules prepared in Preparation Example 1 were applied to one side of an aluminum current collector, rolled, impregnated with a sulfide-based electrolyte of Li₂S-P₂S₅, dried and rolled to provide a positive electrode having a thickness of about 130 µm (wherein the sulfide-based electrolyte was comprised in an amount of about 20 wt% relative to the granules). Li₂S-LiCl-P₂S₅ was mixed with a polyvinylidene fluoride (PVDF) solution (which is a solution of PVDF and toluene in a weight ratio of 8:92) to prepare a slurry, and was then applied with a thickness of about 100 µm on top of a lithium foil (a Li foil) with a thickness of about 50 µm to prepare a solid electrolyte and a negative electrode comprising same. An electrode assembly was prepared by laminating and pressing the positive electrode and the negative electrode, and then placed inside the battery case to produce an all-solid-state battery.

### Comparative Example 1

An all-solid-state battery was prepared in the same manner as in Example 1, except that in the preparation of a positive electrode, the granules prepared in Comparative Preparation Example 1 were used instead of those prepared in Preparation Example 1.

### Comparative Example 2

An all-solid-state battery was prepared in the same manner as in Example 1, except that in the preparation of a positive electrode, the granules prepared in Comparative Preparation Example 2 were used instead of those prepared in Preparation Example 1.

### Comparative Example 3

An all-solid-state battery was prepared in the same manner as in Example 1, except that in the preparation of a positive electrode, the granules prepared in Comparative Preparation Example 3 were used instead of those prepared in Preparation Example 1.

### Experimental Examples: Evaluation of Preparation Examples and Examples

### Experimental Example 1: SEM image of granules

SEM images were measured for each of the granules prepared in Preparation Example 1 and Comparative Preparation Example 1 are shown in FIGS. 1 (Preparation Example 1) and 2 (Comparative Preparation Example 1). Specifically, in FIGS. 1a and 2a, the overall shape of the granules was identified by measuring at a magnification of ×1,000, and in FIGS. 1b and 2b, the distribution of the conductive material on the surface of the active material of the granules was identified by measuring at a magnification of ×5,000.

According to FIGS. 1a and 1b, the conductive material was distributed on the surface of the active material in the form of more defined particles, so that each of the active material particles in the granules was clearly distinguishable. On the other hand, according to FIGS. 2a and 2b, at the corresponding magnifications, the conductive material had very fine particles and covered the active material particles to the extent that the surface of the active material was not visible, and the boundaries between the active material particles in the granules were blurred.

### Experimental Example 2: Evaluation of the performance of battery

Each of the batteries of Example 1 and Comparative Examples 1 to 3 was discharged to 0.1C and 1.0C, to measure the discharge capacity ratio (1.0C discharge capacity/0.1C discharge capacity×100, %). The results are shown in Table 2 below.

**[Table 2]**

| Performance | Example 1 | Comparative Example 1 | Comparative Example 2 | Comparative Example 3 |
|---|---|---|---|---|
| Discharge capacity ratio (%) | 91 | 47 | 62 | 53 |

According to Tables 1 and 2, the granules according to Preparation Example 1 had higher electrical conductivity compared to the granules according to Comparative Preparation Examples 1 to 3. Furthermore, the battery of Example 1 comprising an electrode prepared using the granules of Preparation Example 1 did not have significantly degraded performance of the battery even under higher C-rate conditions compared to the batteries of Comparative Examples 1 to 3 comprising the electrodes prepared using the granules of Comparative Preparation Examples 1 to 3, respectively.

## Claims

1. An electrode for an all-solid-state battery, comprising granules coated with a sulfide-based solid electrolyte,
wherein the granules comprise an active material, a conductive material and a binder, and
the conductive material is carbon black having an average particle diameter of 120 nm to 200 nm measured as described in the specification,
wherein the granules are spherical particles having a diameter of 30 µm to 150 µm measured as described in the specification,
wherein the electrode for an all-solid-state battery is a positive electrode, and
the active material is a lithium transition metal oxide, and
wherein the granules comprise 85% to 99.8% by weight of the active material, 0.1% to 10% by weight of the binder, and 0.1% to 10% by weight of the conductive material.

2. The electrode for an all-solid-state battery according to claim 1,
wherein the carbon black has a BET specific surface area of 15 m²/g to 35 m²/g measured as described in the specification.

3. The electrode for an all-solid-state battery according to claim 1,
wherein the carbon black has a DBP absorption rate of 70 ml/100 g to 100 ml/100 g measured as described in the specification.

4. The electrode for an all-solid-state battery according to claim 1,
wherein the carbon black agglomerates to form secondary particles, and
the secondary particles have a particle size of 600 nm to 1,100 nm measured as described in the specification.

5. The electrode for an all-solid-state battery according to claim 1,
wherein the granules have a porosity of from 20% to 40% measured as described in the specification.

6. The electrode for an all-solid-state battery according to claim 1,
wherein
the active material is selected from the group consisting of LiCoO₂, LiNiO₂, LiMnO₂, Li₂MnO₃, LiMn₂O₄, Li(NiₐCo_{b}Mn_{c})O₂ (wherein 0<a<1, 0<b<1, 0<c<1, and a+b+c=1), LiNi_{1-y}Co_{y}O₂ (wherein 0<y<1), LiCo_{1-y}Mn_{y}O₂ (wherein 0<y<1), LiNi_{1-y}Mn_{y}O₂ (wherein 0<y<1), Li(NiₐCo_{b}Mn_{c})O₄ (wherein 0<a<2, 0<b<2, 0<c<2, and a+b+c=2), LiMn_{2- z}Ni_{z}O₄ (wherein 0<z<2), LiMn_{2-z}Co_{z}O₄ (wherein 0<z<2), and combinations thereof.

7. The electrode for an all-solid-state battery according to claim 1,
wherein the binder is an organic binder, and
the organic binder is selected from the group consisting of polyvinylidene fluoride (PVDF), vinylidene fluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylene-propylene-diene monomer (EPDM), sulfonated EPDM, styrene-butyrene rubber and fluorinated rubber.

8. The electrode for an all-solid-state battery according to claim 1,
wherein in the electrode for an all-solid-state battery, the electrode active material layer comprising granules coated with a sulfide-based solid electrolyte has a thickness of 100 µm to 300 µm.

9. The electrode for an all-solid-state battery according to claim 1,
wherein in the electrode for an all-solid-state battery, the electrode active material layer comprising granules coated with a sulfide-based solid electrolyte comprises 10% to 30% by weight of a sulfide-based solid electrolyte, based on the content of the granules.

10. The electrode for an all-solid-state battery according to claim 1,
wherein when an inner diameter of the granule is divided into equal intervals, and separated from the center of the granule to the outer of the granule into the first region, second region and third region, the content of the conductive material in the granule is increased in the order of the first region, second region, and third region measured as described in the specification.

11. The electrode for an all-solid-state battery according to claim 10,
wherein the granules have an R value of 5 or less, which is defined by Formula 1: [Formula 1] $R = {\left(\frac{{r}_{B}}{{r}_{A}}\right)}^{2} + {\left(\frac{{r}_{C}}{{r}_{B}}\right)}^{2}$
wherein r_{A} is the content (%) of the conductive material in the first region, r_{B} is the content (%) of the conductive material in the second region, and r_{C} is the content (%) of the conductive material in the third region, and the content of the conductive material in each region is based on the total content of the conductive material in the granules, and is measured as described in the specification.

12. An all-solid-state battery comprising the electrode for an all-solid-state battery according to claim 1 as a positive electrode.

## Patentansprüche

1. Elektrode für eine Festkörperbatterie, umfassend Körnchen, die mit einem Festelektrolyten auf Basis von Sulfid beschichtet sind,
wobei die Körnchen ein aktives Material, ein leitfähiges Material und ein Bindemittel umfassen, und
das leitfähige Material Ruß mit einem durchschnittlichen Partikeldurchmesser von 120 nm bis 200 nm, gemessen wie in der Beschreibung beschrieben, ist,
wobei die Körnchen kugelförmige Partikel mit einem Durchmesser von 30 µm bis 150 µm, gemessen wie in der Beschreibung beschrieben, sind,
wobei die Elektrode für eine Festkörperbatterie eine positive Elektrode ist, und
das aktive Material ein Lithiumübergangsmetalloxid ist, und
wobei die Körnchen 85 Gew.-% bis 99,8 Gew.-% des aktiven Materials, 0,1 Gew.-% bis 10 Gew.-% des Bindemittels und 0,1 Gew.-% bis 10 Gew.-% des leitfähigen Materials umfassen.

2. Elektrode für eine Festkörperbatterie nach Anspruch 1,
bei der der Ruß eine spezifische BET-Oberfläche von 15 m²/g bis 35 m²/g, gemessen wie in der Beschreibung beschrieben, aufweist.

3. Elektrode für eine Festkörperbatterie nach Anspruch 1,
bei der der Ruß eine DBP-Absorptionsrate von 70 ml/100 g bis 100 ml/100 g, gemessen wie in der Beschreibung beschrieben, aufweist.

4. Elektrode für eine Festkörperbatterie nach Anspruch 1,
bei der der Ruß agglomeriert, um Sekundärpartikel zu bilden, und
die Sekundärpartikel eine Partikelgröße von 600 nm bis 1.100 nm, gemessen wie in der Beschreibung beschrieben, aufweisen.

5. Elektrode für eine Festkörperbatterie nach Anspruch 1,
bei der die Körnchen eine Porosität von 20 % bis 40 %, gemessen wie in der Beschreibung beschrieben, aufweisen.

6. Elektrode für eine Festkörperbatterie nach Anspruch 1,
bei der
das aktive Material ausgewählt ist aus der Gruppe bestehend aus LiCoO₂, LiNiO₂, LiMnO₂, Li₂MnO₃, LiMn₂O₄, Li(NiₐCo_{b}Mn_{c})O₂ (wobei 0<a<1, 0<b<1, 0<c<1 und a+b+c=1), LiNi_{1-y}Co_{y}O₂ (wobei 0<y<1), LiCo_{1-y}Mn_{y}O₂ (wobei 0<y<1), LiNi_{1-y}Mn_{y}O₂ (wobei 0<y<1), Li(NiₐCo_{b}Mn_{c})O₄ (wobei 0<a<2, 0<b<2, 0<c<2 und a+b+c=2), LiMn_{2- z}Ni_{z}O₄ (wobei 0<z<2), LiMn_{2-z}Co_{z}O₄ (wobei 0<z<2) und Kombinationen davon.

7. Elektrode für eine Festkörperbatterie nach Anspruch 1,
bei der das Bindemittel ein organisches Bindemittel ist, und
das organische Bindemittel ausgewählt ist aus der Gruppe bestehend aus Polyvinylidenfluorid (PVDF), Vinylidenfluorid-Hexafluorpropylen-Copolymer (PVDF-co-HFP), Polyvinylalkohol, Stärke, Hydroxypropylcellulose, regenerierter Cellulose, Polyvinylpyrrolidon, Polyimid, Polyamidimid, Polyethylen, Polypropylen, Ethylen-Propylen-Dien-Monomer (EPDM), sulfoniertem EPDM, Styrol-Butylen-Kautschuk und fluoriertem Kautschuk.

8. Elektrode für eine Festkörperbatterie nach Anspruch 1,
bei der in der Elektrode für eine Festkörperbatterie die Elektrodenaktivmaterialschicht, die Körnchen umfasst, die mit einem Festelektrolyten auf Basis von Sulfid beschichtet sind, eine Dicke von 100 µm bis 300 µm aufweist.

9. Elektrode für eine Festkörperbatterie nach Anspruch 1,
bei der in der Elektrode für eine Festkörperbatterie die Elektrodenaktivmaterialschicht, die Körnchen umfasst, die mit einem Festelektrolyten auf Basis von Sulfid beschichtet sind, 10 Gew.-% bis 30 Gew.-% eines Festelektrolyten auf Basis von Sulfid, bezogen auf den Gehalt der Körnchen, umfasst.

10. Elektrode für eine Festkörperbatterie nach Anspruch 1,
bei der, wenn ein Innendurchmesser der Körnchen in gleiche Intervalle unterteilt ist und von der Mitte der Körnchen zur Außenseite der Körnchen in den ersten Bereich, den zweiten Bereich und den dritten Bereich getrennt ist, der Gehalt des leitfähigen Materials in den Körnchen in der Reihenfolge des ersten Bereichs, des zweiten Bereichs und des dritten Bereichs, gemessen wie in der Beschreibung beschrieben, erhöht ist.

11. Elektrode für eine Festkörperbatterie nach Anspruch 10,
bei der die Körnchen einen R-Wert von 5 oder weniger aufweisen, der durch Formel 1 definiert ist: [Formel 1] $R = {\left(\frac{{r}_{B}}{{r}_{A}}\right)}^{2} + {\left(\frac{{r}_{C}}{{r}_{B}}\right)}^{2}$
bei der r_{A} der Gehalt (%) des leitfähigen Materials in dem ersten Bereich ist, r_{B} der Gehalt (%) des leitfähigen Materials in dem zweiten Bereich ist und r_{C} der Gehalt (%) des leitfähigen Materials in dem dritten Bereich ist und der Gehalt des leitfähigen Materials in jedem Bereich auf dem Gesamtgehalt des leitfähigen Materials in den Körnchen basiert und wie in der Beschreibung beschrieben gemessen ist.

12. Festkörperbatterie, umfassend die Elektrode für eine Festkörperbatterie nach Anspruch 1 als eine positive Elektrode.

## Revendications

1. Électrode pour une batterie tout-solide, comprenant des granules revêtus d'un électrolyte solide à base de sulfure,
où les granules comprennent un matériau actif, un matériau conducteur et un liant, et
le matériau conducteur est un noir de carbone ayant un diamètre de particule moyen de 120 nm à 200 nm, mesuré comme décrit dans la spécification,
où les granules sont des particules sphériques ayant un diamètre de 30 µm à 150 µm, mesuré comme décrit dans la spécification,
où l'électrode pour une batterie tout-solide est une électrode positive, et
le matériau actif est un oxyde de métal de transition lithium, et
où les granules comprennent 85 % à 99,8 % en poids du matériau actif, 0,1 % à 10 % en poids du liant et 0,1 % à 10 % en poids du matériau conducteur.

2. Électrode pour une batterie tout-solide selon la revendication 1,
où le noir de carbone a une surface spécifique BET de 15 m²/g à 35 m²/g, mesurée comme décrit dans la spécification.

3. Électrode pour une batterie tout-solide selon la revendication 1,
où le noir de carbone a un taux d'absorption de DBP de 70 ml/100 g à 100 ml/100 g, mesuré comme décrit dans la spécification.

4. Électrode pour une batterie tout-solide selon la revendication 1,
où le noir de carbone s'agglomère pour former des particules secondaires, et
les particules secondaires ont une taille de particule de 600 nm à 1100 nm, mesurée comme décrit dans la spécification.

5. Électrode pour une batterie tout-solide selon la revendication 1,
où les granules ont une porosité de 20 % à 40 %, mesurée comme décrit dans la spécification.

6. Électrode pour une batterie tout-solide selon la revendication 1,
où
le matériau actif est sélectionné dans le groupe constitué de LiCoO₂, LiNiO₂, LiMnO₂, Li₂MnO₃, LiMn₂O₄, Li(NiₐCo_{b}Mn_{c})O₂ (où 0<a<1, 0<b<1, 0<c<1, et a+b+c=1), LiNi_{1-y}Co_{y}O₂ (où 0<y<1), LiCo_{1-y}Mn_{y}O₂ (où 0<y<1), LiNi_{1-y}Mn_{y}O₂ (où 0<y<1), Li(NiₐCo_{b}Mn_{c})O₄ (où 0<a<2, 0<b<2, 0<c<2, et a+b+c=2), LiMn_{2-z}Ni_{z}O₄ (où 0<z<2), LiMn_{2-z}Co_{z}O₄ (où 0<z<2), et des combinaisons de ces derniers.

7. Électrode pour une batterie tout-solide selon la revendication 1,
où le liant est un liant organique, et
le liant organique est sélectionné dans le groupe constitué de fluorure de vinylidène (PVDF), copolymère de fluorure de vinylidène-hexafluoropropylène (PVDF-co-HFP), alcool polyvinylique, amidon, hydroxypropylcellulose, cellulose régénérée, polyvinylpyrrolidone, polyimide, polyamideimide, polyéthylène, polypropylène, monomère d'éthylène-propylène-diène (EPDM), EPDM sulfoné, caoutchouc styrène-butylène et caoutchouc fluoré.

8. Électrode pour une batterie tout-solide selon la revendication 1,
Où, dans l'électrode pour une batterie tout-solide, la couche de matériau actif d'électrode comprenant des granules revêtus d'un électrolyte solide à base de sulfure a une épaisseur de 100 µm à 300 µm.

9. Électrode pour une batterie tout-solide selon la revendication 1,
où, dans l'électrode pour une batterie tout-solide, la couche de matériau actif d'électrode comprenant des granules revêtus d'un électrolyte solide à base de sulfure comprend 10 % à 30 % en poids d'un électrolyte solide à base de sulfure, sur la base de la teneur des granules.

10. Électrode pour une batterie tout-solide selon la revendication 1,
où, quand un diamètre intérieur du granule est divisé en intervalles égaux, et séparé du centre du granule à l'extérieur du granule en une première région, une deuxième région et une troisième région, la teneur du matériau conducteur dans le granule augmente dans l'ordre de la première région, la deuxième région et la troisième région, mesurée comme décrit dans la spécification.

11. Électrode pour une batterie tout-solide selon la revendication 10,
où les granules ont une valeur R égale ou supérieure à 5, laquelle est définie par la Formule 1 : [Formule 1] $R = {\left(\frac{{r}_{B}}{{r}_{A}}\right)}^{2} + {\left(\frac{{r}_{C}}{{r}_{B}}\right)}^{2}$
où r_{A} est la teneur (%) du matériau conducteur dans la première région, r_{B} est la teneur (%) du matériau conducteur dans la deuxième région et r_{C} est la teneur (%) du matériau conducteur dans la troisième région, et la teneur du matériau conducteur dans chaque région est sur la base de la teneur totale du matériau conducteur dans les granules et est mesurée comme décrit dans la spécification.

12. Batterie tout-solide comprenant l'électrode pour une batterie tout-solide selon la revendication 1 laquelle est une électrode positive.
